Europäisches Patentamt

European Patent Office

Office européen des brevets

(19)

(11) EP 1 542 222 A2

## (12) EUROPEAN PATENT APPLICATION

(43) Date of publication:
15.06.2005 Bulletin 2005/24

(51) Int Cl.$^7$: **G11B 9/00**, G11B 9/02

(21) Application number: 04029368.0

(22) Date of filing: 10.12.2004

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **10.12.2003 JP 2003412223**

(72) Inventors:
• **Takahashi, Hirokazu c/o Pioneer Corporation Tsurugashima-shi Saitama (JP)**
• **Ono, Takahito Sendai-shi Miyagi (JP)**
• **Esashi, Masayoshi Sendai-shi Miyagi (JP)**

(71) Applicants:
• **Pioneer Corporation Meguro-ku, Tokyo (JP)**
• **ESASHI, Masayoshi Sendai-shi, Miyagi (JP)**

(74) Representative:
**Reinhard - Skuhra - Weise & Partner GbR Friedrichstrasse 31 80801 München (DE)**

(54) **Recording/reproducing head, method of producing the same, recording apparatus and reproducing apparatus**

(57)     A recording / reproducing head (100) is intended to perform at least one of a record operation of recording information onto a dielectric recording medium (20) and a reproduction operation of reproducing the information from the dielectric recording medium. The recording / reproducing head (100) is provided with: a support member (130) which extends in a longitudinal direction; a projection portion (110) which is mounted on the support member such that a tip of the projection portion faces the dielectric recording medium; and a conductive layer (120) which covers a part other than at least the tip out of the projection portion, the projection portion containing a harder material than that of the conductive layer.

FIG. 1A

EP 1 542 222 A2

Printed by Jouve, 75001 PARIS (FR)

**Description**

BACKGROUND OF THE INVENTION

1. Field of the Invention

The present invention relates to a recording / reproducing head for recording and reproducing polarization information recorded on a dielectric substance, such as a ferroelectric recording medium, as well as a method of producing the recording / reproducing head, and a recording apparatus and a reproducing apparatus which use the recording / reproducing head.

2. Description of the Related Art

A technique of a recording / reproducing apparatus which uses SNDM (Scanning Nonlinear Dielectric Microscopy) for nano-scale analysis of a dielectric recording medium is suggested by the inventors of the present invention. In SNDM, it is possible to increase its resolution associated with the measurement to sub nanometer resolution, by using an electric conductive cantilever (or probe) with a small probe mounted on its tip, which is used for AFM (Atomic Force Microscopy) or the like. Recently, the development of a super high density recording / reproducing apparatus has been advanced, wherein the apparatus records data onto a recording medium having a recording layer made of a ferroelectric material, by using the technique of SNDM (refer to Japanese Patent Application Laying Open NO. 2003-085969).

The recording / reproducing apparatus of this type which uses SNDM reproduces information by detecting a positive or negative direction of polarization of the recording medium. This is performed by using a change in an oscillation frequency of a LC oscillator, which includes (i) a high frequency feedback amplifier including an L component, (ii) a conductive probe mounted on this amplifier, and a capacitance Cs of the ferroelectric material under the probe, caused by a change $\Delta C$ in a small capacitance due to a non-linear dielectric constant which have origin in the distribution of the positive and negative of the polarization. Namely, it is performed by detecting the change in the distribution of the positive and negative of the polarization, as a change $\Delta f$ in the oscillation frequency.

Moreover, by applying an alternating electric field whose frequency is sufficiently low with respect to the oscillation frequency in order to detect a difference in the positive and negative of the polarization, the oscillation frequency is changed along with the alternating electric field, and the rate of change in the oscillation frequency including its sign is determined by the non-linear dielectric constant of the ferroelectric material under the probe. Then, by FM (Frequency Modulation) demodulating and extracting a component due to the alternating electric field, from a high-frequency signal of the LC oscillator which is FM-modulated in accordance with the change in the small capacitance $\Delta C$ along with the application of the alternating electric field, the record information (data) recorded on the ferroelectric recording medium is reproduced.

SUMMARY OF THE INVENTION

The record and reproduction of the record information is performed by using the probe as a recording / reproducing head. Since the probe constitutes a part of a resonance circuit, its resistance value (its electric resistance value) is desired to be relatively small. From the study of the inventers of the present invention, it is found out that the resistance value of the probe can be reduced by depositing an alloy thin film, including platinum, onto silicon.

On the other hand, it is required that the probe has abrasion resistance, in view of abrasion and deformation caused by contact with the recording medium or the like. Considering from such a viewpoint, the probe provided with the alloy thin film, including platinum, is easily abraded, and the tip of the probe wears away with a continued use, so that there is such a technical problem that it is difficult or substantially impossible to continue its use as the probe. Moreover, if a thin film of platinum exfoliates or comes off, it no longer satisfies a request as the probe whose resistance value is relatively small. Even from this point, there is such a technical problem that it is difficult or substantially impossible to continue the use as the probe.

It is therefore an object of the present invention to provide a recording / reproducing head which is highly resistant to deterioration, such as abrasion, and whose electric resistance value is relatively small, as well as a method of producing the recording / reproducing head, and a recording apparatus and a reproducing apparatus which use the recording / reproducing head.

The above object of the present invention can be achieved by a recording / reproducing head for performing at least one of a record operation of recording information onto a dielectric recording medium and a reproduction operation of reproducing the information from the dielectric recording medium, the recording / reproducing head provided with: a support member which extends in a longitudinal direction (for example a longitudinal direction of the recording / reproducing head); a projection portion which is mounted on the support member such that a tip of the projection portion faces the dielectric recording medium; and a conductive layer which covers a part portion other than at least the tip out of the projection portion, the projection portion containing a harder material than that of the conductive layer.

According to the recording / reproducing head of the present invention, by covering the surface of the projection portion with the conductive layer, it is possible to reduce the electric resistance value of the recording / reproducing head, and it is also possible to realize the recording / reproducing head which is resistant to the deterioration, such as abrasion.

Specifically, the recording / reproducing head of the present invention is provided with the support member which extends in the longitudinal direction. The support member may or may not have electric conductivity. Therefore, although there are various types of materials which can be used as the support member, it is preferable to select an appropriate material in accordance with a resonance frequency of a resonance circuit (in other words, an oscillation frequency of an oscillator) in a reproducing apparatus, as described later. Alternatively, by selecting an appropriate material, it is also possible to change a vibration frequency obtained when the recording / reproducing head is moved along the surface of the information recording medium, as occasion demands. The projection portion is mounted on one end of the support member such that the tip of the projection portion faces the dielectric recording medium. The projection portion may be mounted upright on the support member. The material used for the projection portion is harder than the material used for the conductive layer. As the projection portion, for example, diamond, boron nitride, and the like are used, as described later.

Then, the surface of the projection portion is covered with the conductive layer. In particular, the part other than at least the tip of the projection portion is covered with the conductive layer. In other words, the tip of the projection portion is not covered with the conductive layer, and the surface thereof is exposed. At this time, the tip is preferably large enough to contact or substantially contact the dielectric recording medium (i.e. as large as the diameter of the tip portion, the exposed portion, or the like). Moreover, it is enough if the path of an electric field is formed in the conductive layer and if the conductive layer covers the projection portion to an extent to show a function as the recording / reproducing head in a recording apparatus or a reproducing apparatus as described later. Incidentally, the conductive layer is preferably provided with a metal material having electric conductivity, and a material containing platinum or the like is used, as described later. In particular, the conductive layer preferably has larger electric conductivity than those of the projection portion and the support member.

If the recording / reproducing head of the present invention is used in the recording apparatus or the reproducing apparatus and if an electric field is supplied to the recording / reproducing head, the electric field is applied to between the dielectric recording medium and the recording / reproducing head of the present invention, mainly via the conductive layer (i.e. the path of the electric field formed in the conductive layer). Namely, since the conductive layer is formed, it is possible to reduce the electric resistance value of the recording / reproducing head as a whole. Moreover, the tip of the projection portion is not covered with the conductive layer but exposed. However, the exposed portion is really small from the view of the entire recording / reproducing head, and the path of the electric field formed in the projection portion is extremely short. Therefore, it does not greatly influence on the change of the electric resistance value of the recording / reproducing head as a whole, and as a result, it is possible to suppress the electric resistance value of the recording / reproducing head, to thereby realize the recording / reproducing head having a small electric resistance value.

In addition, because the tip of the projection portion is exposed, it is the tip that can actually contact the dielectric recording medium. The projection portion, including the tip, is resistant to the deterioration, such as abrasion, grinding, and polishing, because the projection portion uses a harder material than the conductive layer. More preferably, a material harder than the material used for the dielectric recording medium is used for the projection portion. Therefore, even if the surface (or at least a part of the surface) of the projection portion is covered with the conductive layer which is a relatively soft material, by using a harder material on the tip which can actually contact the dielectric recording material, it is possible to provide strong deterioration resistance.

Consequently, according to the recording / reproducing head of the present invention, it has resistant to the deterioration, such as abrasion, and it is possible to reduce its resistance value. Thus, it is possible to extend its lifetime of use, by inhibiting the deterioration of the recording / reproducing head. Moreover, by reducing the electric resistance value, it is possible to inhibit the attenuation of a signal in the resonance circuit, in the reproducing apparatus described later.

Incidentally, it is preferable that the projection portion also has electric conductivity, as described later. However, from the viewpoint that an electric field can be applied via the conductive layer, the projection portion is not necessarily provided with the electric conductivity.

Moreover, the support member and the projection portion may be formed in one body. Namely, even if the support member and the projection portion are formed from a single member, if the support member and the projection portion can be distinguished from a difference in their shapes, then, this aspect is included in the present invention.

In one aspect of the recording / reproducing head of the present invention, the conductive layer at least partially covers a surface of the support member on a side where the projection portion is mounted, in addition to the part other than at least the tip out of the projection portion.

According to this aspect, by at least partially covering the support member, it is possible to further reduce the electric resistance of the recording / reproducing head as a whole. Incidentally, the support member in this case may not necessarily have electric conductivity.

In another aspect of the recording / reproducing head of the present invention, the tip has such a shape that the tip protrudes from an edge of the conductive layer which surrounds the tip.

According to this aspect, the projection portion (i.e. the tip thereof) is not only exposed but also protrudes from the conductive film, so that it is possible to reduce the possibility that the conductive layer contacts the dielectric recording medium, and it is possible to provide the stronger deterioration resistance of the recording / reproducing head.

Incidentally, it is preferable that the tip protrudes to an extent enough to contact or substantially contact the dielectric recording medium. Alternatively, it is preferable that the tip protrudes to an extent enough to prevent the conductive layer from contacting the dielectric recording medium.

In another aspect of the recording / reproducing head of the present invention, the tip has a rounded shape.

According to this aspect, it is possible to contact the recording / reproducing head with the dielectric recording medium with stability, in the record operation of the recording apparatus and in the reproduction operation of the reproducing apparatus, as described later. Namely, since the tip of the recording / reproducing head has a rounded shape, it easily contacts the dielectric recording medium at a point.

In another aspect of the recording / reproducing head of the present invention, the tip has a flat surface, located on a same surface as an edge of the conductive layer which surrounds the tip.

According to this aspect, the tip (e.g. the surface of the tip which could actually contact the dielectric recording medium) is flattened to locate on the same surface as the conductive layer. Here, "be located on the same surface" in the present invention indicates such construction that the tip (e.g. the surface of the tip which could actually contact the dielectric recording medium) and the edge of the conductive layer, which surrounds the tip, can contact the dielectric recording medium at the same time, or can be regarded to contact it substantially at the same time. The "same surface" in the present invention literally indicates the same surface, and also broadly includes even such a positional relationship that can be regarded as the same surface. Therefore, it is possible to make the tip of the projection portion and the edge portion of the conductive film approach the dielectric recording medium, to thereby improve the resolution of the head. Namely, it is possible to reduce the size (dimension) of an information unit which can be recorded and reproduced.

In another aspect of the recording / reproducing head of the present invention, the projection portion has electric conductivity.

According to this aspect, by providing the projection portion with electric conductivity, it is possible to further suppress the electric resistance value of the recording / reproducing head as a whole.

In an aspect of the recording / reproducing head provided with the projection portion which has electric conductivity, as described above, the projection portion may contain diamond to which impurities are doped.

By constituting in this manner, diamond (i.e. diamond to which impurities are doped), which is superhard and excellent in lubricating ability, can be used as the projection portion. Because of its superhard, it is possible to increase the abrasion resistance of the conductive layer much more. And because of its electric conductivity caused by the doped impurities, it is possible to suppress the electric resistance value of the recoding / reproducing head. Incidentally, in this aspect, the impurities which are doped may be boron, for example. Alternatively, even in the case of impurities associated with other atoms (other material), any impurities which can cause electric conductivity to diamond will suffice.

In an aspect of the recording / reproducing head provided with the projection portion which has electric conductivity, the projection portion may contain boron as the impurities.

By constituting in this manner, it is possible to receive various benefits owned by the recording / reproducing head of the present invention, by using boron nitride, for example.

In another aspect of the recording / reproducing head of the present invention, the conductive layer contains platinum.

According to this aspect, by using platinum, which is a relatively hard material, it is possible to increase the abrasion resistance of the conductive layer. In addition, by virtue of platinum which has electric conductivity, it is possible to suppress the electric resistance value of the conductive film. Incidentally, it is more preferable to use alloy, such as platinum palladium and platinum iridium, as the conductive layer.

In another aspect of the recording / reproducing head of the present invention, the projection portion contains a non-conductive material.

According to this aspect, even if the projection portion does not have electric conductivity (i.e. non-conductive), it is possible to apply an electric filed to between the projection portion and the dielectric recording medium via the conductive film.

In another aspect of the recording / reproducing head of the present invention, the conductive layer is formed on a foundation layer which is more adhesive than said conductive layer.

According to this aspect, it is possible to further prevent the conductive layer from exfoliating or peeling off or cut off, and it is possible to extend the lifetime of use of the recording / reproducing head. As the foundation layer, for example, a metal thin film, such as titanium, may be used.

The above object of the present invention can be also achieved by a production method of producing the above-described recording / reproducing head (including its various aspects), the production method provided with: a first forming process of forming the support member and the projection portion; a second forming process of forming the conductive layer to cover at least the projection portion; and an exposing process of expositing at least the tip.

According to the production method of the present invention, it is possible to produce the above-described recording / reproducing head relatively easily.

Specifically, at first, in the first forming process, the projection portion and the support member are formed. They can be formed by combining various processes, such as patterning by a resist, etching, and a film formation method (or a film growth method).

Then, in the second forming process, the conductive layer is formed to cover the projection portion. The conductive layer may be formed to cover the support member in addition to the projection portion. The conductive layer (i.e. a conductive film) can be formed by using a vacuum evaporation method, for example. Alternatively, the conductive layer may be formed by using other film formation methods (e.g. spattering, Chemical Vapor Deposition (CVD), or the like)

Then, after or at the same time of the second forming process, in the exposing process, the tip of the projection portion is exposed from the conductive layer. In the exposing process, various methods as described later can be used, and in any method adopted, it is possible to expose the tip appropriately.

Consequently, according to the production method of the present invention, it is possible to produce the above-described recording / reproducing head efficiently and relatively easily.

In one aspect of the production method of the present invention, in the second forming process, after a foundation layer which is more adhesive than the conductive layer is formed, the conductive layer is formed on the foundation layer.

According to this aspect, it is possible to produce the recording / reproducing head in which the conductive layer is further prevented from exfoliating or peeling off or cut off. Therefore, it is possible to produce the recording / reproducing head whose lifetime of use is long.

In another aspect of the production method of the present invention, in the exposing process, the tip is exposed by grinding or polishing the conductive layer formed on the tip.

According to this aspect, if the conductive layer is grinded or polished, the tip of the projection portion can be exposed relatively easily. Therefore, without influenced by complicated production parameters and a production environment or the like, it is possible to produce the recording / reproducing head of the present invention relatively easily.

In another aspect of the production method of the present invention, the second forming process further includes a resist coating process of coating a resist onto at least the tip before the conductive layer is formed, and in the exposing process, the tip is exposed by removing the resist.

According to this aspect, by using the patterning of the resist, it is possible to expose the tip selectively. Moreover, by changing the shape of the patterning (i.e. the shape of the coated resist), it is also possible to adjust the size and shape or the like of the tip which is exposed.

In another aspect of the production method of the present invention, in the exposing process, the tip is exposed by applying a pulse voltage to a part which covers at least the tip out of the conductive layer to exfoliate the conductive layer which covers the tip.

According to this aspect, the conductive layer is exfoliated by using the principle of spattering, so that it is possible to expose the tip relatively easily.

In another aspect of the production method of the present invention, in the first forming process, a silicon (100) substrate is used as a cast, and the first forming process is provided with: a mold-forming process of forming a mold of the projection portion by performing anisotropic etching with respect to the cast; and a projection-portion-forming process of forming the projection portion by using the mold of the projection portion.

The silicon substrate has such a property that an etching rate varies depending on a difference of interatomic bonds in a crystal lattice surfaces of a (100) surface and a (111) surface thereof. Therefore, according to this aspect, it is possible to form the mold in the projective shape (or in a pyramid-shape), which is required for the formation of the projection portion, by performing the anisotropic etching using such a property, in the mold-forming process. Then, the use of the mold allows the formation of the projection portion, relatively easily, in the projection-portion-forming process.

Incidentally, not only the silicon substrate but also a material having the above-described property can be used as the cast in place of the silicon substrate.

The above object of the present invention can be also achieved by a recording apparatus for recording data onto a dielectric recording medium, the recording apparatus provided with: the above-described recording / reproducing head (including its various aspects); and a record signal generating device for generating a record signal corresponding to the data.

According to the recording apparatus of the present invention, it is possible to record the data on the basis of the record signal generated by the recording signal generating device, while taking advantage of the above-described recording / reproducing head of the present invention. Namely, in the record operation, even if the recording / reproducing head contacts the dielectric recording medium, there is little possibility of damage or the like, because the tip of the projection portion is exposed to thereby have the strong deterioration resistance.

Therefore, it is possible to record the data with more stability and extend the lifetime of the recording apparatus.

The above object of the present invention can be also achieved by a reproducing apparatus for reproducing data recorded on a dielectric recording medium, the reproducing apparatus provided with: the above-described recording / reproducing head (including its various aspects); an electric field applying device for applying an electric field to the dielectric recording medium; an oscillating device whose oscillation frequency varies depending on a difference in a capacitance corresponding to a non-linear dielectric constant of the dielectric recording medium; and a reproducing device for demodulating and reproducing an oscillation signal from the oscillating device.

According to the reproducing apparatus of the present invention, by applying an electric field to the dielectric recording medium by using the electric filed applying device, the oscillation frequency of the oscillating device is changed, due to a change in the capacitance corresponding to a change in the non-linear dielectric constant of the dielectric recording medium. Then, the oscillation signal corresponding to the change in the oscillation frequency of the oscillating device is demodulated and reproduced by the reproducing device, to thereby reproduce the data.

Particularly in the present invention, the data can be reproduced by taking advantage of the above-described recording / reproducing head of the present invention. Namely, in the reproduction operation, even if the recording / reproducing head contacts the dielectric recording medium, there is little possibility of damage or the like, because the tip of the projection portion is exposed to thereby have the strong deterioration resistance. Moreover, since the resistance value of the recording / reproducing head is small, it is possible to avoid the disadvantage of the attenuation of the oscillation signal from the oscillating device.

Therefore, it is possible to reproduce the data with more stability and extend the lifetime of the reproducing apparatus.

The nature, utility, and further features of this invention will be more clearly apparent from the following detailed description with reference to preferred embodiment of the invention when read in conjunction with the accompanying drawings briefly described below.

As explained above, according to the recording / reproducing head of the present invention, it is provided with: the support member; the projection portion; and the conductive layer. Therefore, it is possible to realize the recording / reproducing head which is resistant to the deterioration, such as abrasion, and whose electric resistance value is relatively small.

Moreover, according to the production method of the present invention, it is provided with: the first forming process; the second forming process; and the exposing process. Therefore, it is possible to produce the recording / reproducing head of the present relatively easily and efficiently.

Moreover, according to the recording apparatus of the present invention, it is provided with the recording / reproducing head of the present invention and the record signal generating device. Therefore, it is possible to receive various benefits owned by the recording / reproducing head of the present invention, and thus, it is possible to record the data with more stability and extend the lifetime of the recording apparatus.

Furthermore, according to the reproducing apparatus of the present invention, it is provided with: the recording / reproducing of the present invention head; the electric field applying device; the oscillating device, and the reproducing device. Therefore, it is possible to receive various benefits owned by the recording / reproducing head of the present invention, and thus, it is possible to reproduce the data with more stability and extend the lifetime of the reproducing apparatus..

BRIEF DESCRIPTION OF THE DRAWINGS

FIG. 1A, FIG. 1B, and FIG. 1C are a cross sectional view, a plan view, and a side view, respectively, conceptually showing one specific example of a recording / reproducing head in an embodiment of the present invention.

FIG. 2A, FIG. 2B, and FIG. 2C are a cross sectional view, a plan view, and a side view, respectively, conceptually showing another specific example of the recording / reproducing head in the embodiment of the present invention;

FIG. 3 is a cross sectional view conceptually showing one process of a production method for the recording / reproducing head in the embodiment of the present invention;

FIG. 4 is a cross sectional view conceptually showing another process of a production method for the recording / reproducing head in the embodiment of the present invention;

FIG. 5A and FIG. 5B are a cross sectional view and a plan view, respectively, conceptually showing another process of the production method for the recording / reproducing head in the embodiment of the present invention;

FIG. 6A and FIG. 6B are a cross sectional view and a plan view, respectively, conceptually showing another process of the production method for the recording / reproducing head in the embodiment of the present invention;

FIG. 7A and FIG. 7B are a cross sectional view and a plan view, respectively, conceptually showing another process of the production method for the recording / reproducing head in the embodiment of the present invention;

FIG. 8A and FIG. 8B are a cross sectional view and a plan view, respectively, conceptually showing another process of the production method for the recording / reproducing head in the embodiment of the present invention;

FIG. 9A and FIG. 9B are a cross sectional view and a plan view, respectively, conceptually showing another process of the production method for the recording / reproducing head in the embodiment of the present invention;

FIG. 10 is a cross sectional view conceptually showing another process of the production method for the recording / reproducing head in the embodiment of the present invention;

FIG. 11 is a cross sectional view conceptually showing another process of the production method for the recording / reproducing head in the embodiment of the present invention;

FIG. 12 is a cross sectional view conceptually showing another process of the production method for the recording / reproducing head in the embodiment of the present invention;

FIG. 13 is a cross sectional view conceptually showing another process of the production method for the recording / reproducing head in the embodiment of the present invention;

FIG. 14 is a cross sectional view conceptually showing another process of the production method for the recording / reproducing head in the embodiment of the present invention;

FIG. 15A and FIG. 15B are a cross sectional view and a plan view, respectively, conceptually showing another process of the production method for the recording / reproducing head in the embodiment of the present invention;

FIG. 16A and FIG. 16B are a cross sectional view and a plan view, respectively, conceptually showing another process of the production method for the recording / reproducing head in the embodiment of the present invention;

FIG. 17 is a cross sectional view conceptually showing another process of the production method for the recording / reproducing head in the embodiment of the present invention;

FIG. 18 is a cross sectional view conceptually showing another process of the production method for the recording / reproducing head in the embodiment of the present invention;

FIG. 19A, FIG. 19B, and FIG. 19C are cross sectional views conceptually showing another process of the production method for the recording / reproducing head in the embodiment of the present invention.

FIG. 20A, FIG. 20B, and FIG. 20C are cross sectional views conceptually showing another process of the production method for the recording / reproducing head in the embodiment of the present invention;

FIG. 21 is a block diagram conceptually showing a basic structure of a dielectric recording / reproducing apparatus in an embodiment which adopts the recording / reproducing head in the embodiment of the present invention;

FIG. 22A and FIG. 22B are a plan view and a cross sectional view, respectively, conceptually showing a dielectric recording medium used for information reproduction on the dielectric recording / reproducing apparatus in the embodiment;

FIG. 23 is a cross sectional view conceptually showing a record operation of the dielectric recording / reproducing apparatus in the embodiment; and

FIG. 24 is a cross sectional view conceptually showing a reproduction operation of the dielectric recording / reproducing apparatus in the embodiment.

## DETAILED DESCRIPTION OF THE PREFERRED EMBODIMENTS

The embodiment associated with the recording / reproducing head of the present invention will be hereinafter explained with reference to the drawings.

(1) Embodiment of Recording / Reproducing Head

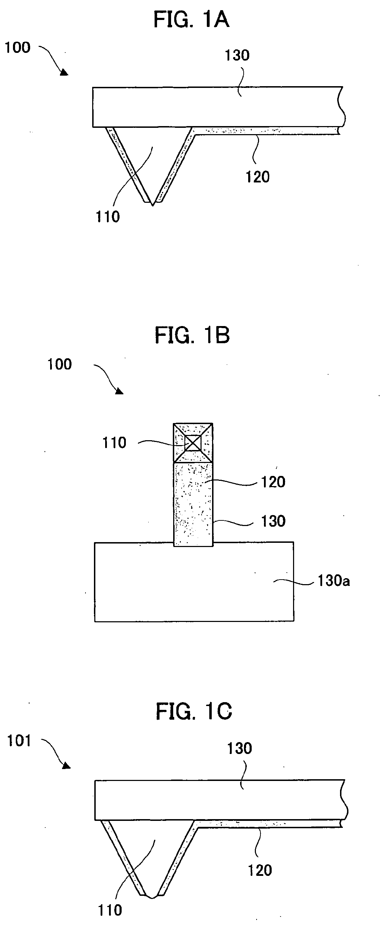

At first, with reference to FIGs. 1 to FIGs. 20, the embodiment associated with the recording / reproducing head of the present invention will be explained.

(i) Structure of Recording / Reproducing Head

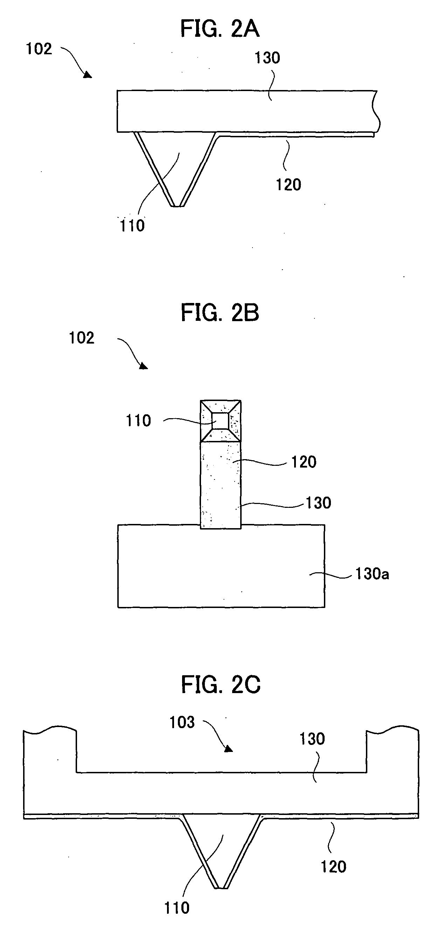

At first, with reference to FIGs. 1 to FIG. 2, the structure (i.e. basic structure) of the recording / reproducing head in the embodiment will be explained. FIG. 1A, FIG. 1B, and FIG. 1C conceptually show one example of the structure of the recording / reproducing head in the embodiment. FIG. 2A, FIG. 2B, and FIG. 2C conceptually show another specific example of the structure of the recording / reproducing head in the embodiment.

As shown in FIG. 1A, a recording / reproducing head 100 in the embodiment is provided with: a diamond tip 110, which is one specific example of the "projection portion" of the present invention; a conductive film 120; and a support member 130.

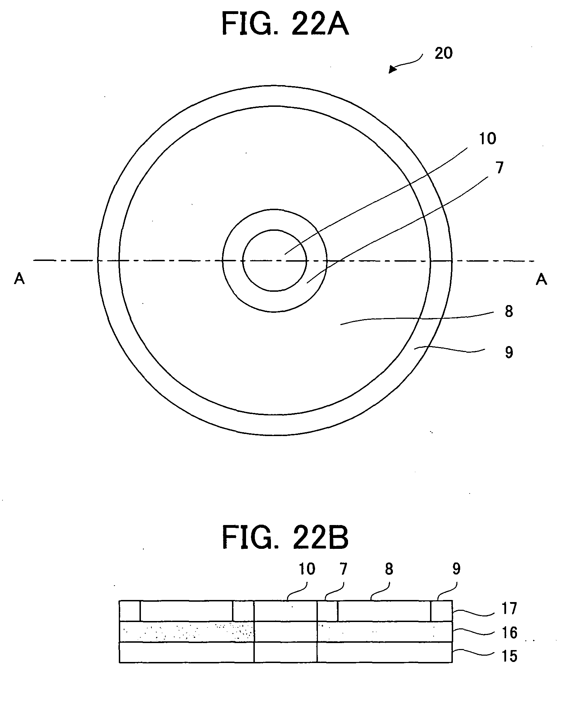

The diamond tip 110 has a narrowed and pointed tip so that an electric field is applied to a dielectric recoding medium 20 as described later (refer to FIG. 22) from the tip side, in the record / reproduction operations of the recording / reproducing head 100. In particular, the diamond tip 110 preferably has electric conductivity, obtained by doping boron or the like to diamond at the time of production.

Incidentally, in place of the diamond tip 110, for example, boron nitride can be used. Alternatively, what is harder than the conductive film 120 and has electric conductivity can be used in place of the diamond tip 110.

The conductive film 120 is formed to cover the surfaces of the diamond tip 110 and the support member 130. In particular, as shown in FIG. 1A, the conductive film 120 is formed except on the tip of the diamond tip 110.

As the conductive film 120, for example, alloy, such as platinum palladium and platinum iridium, can be used. Considering that the conductive film 120 could also contact the dielectric recording medium 20 as with the diamond tip 110, the conductive film 120 is preferably a hard film. However, the conductive film 120 does not require hardness like the diamond tip 110, and may require hardness to an extent enough to maintain a constant form.

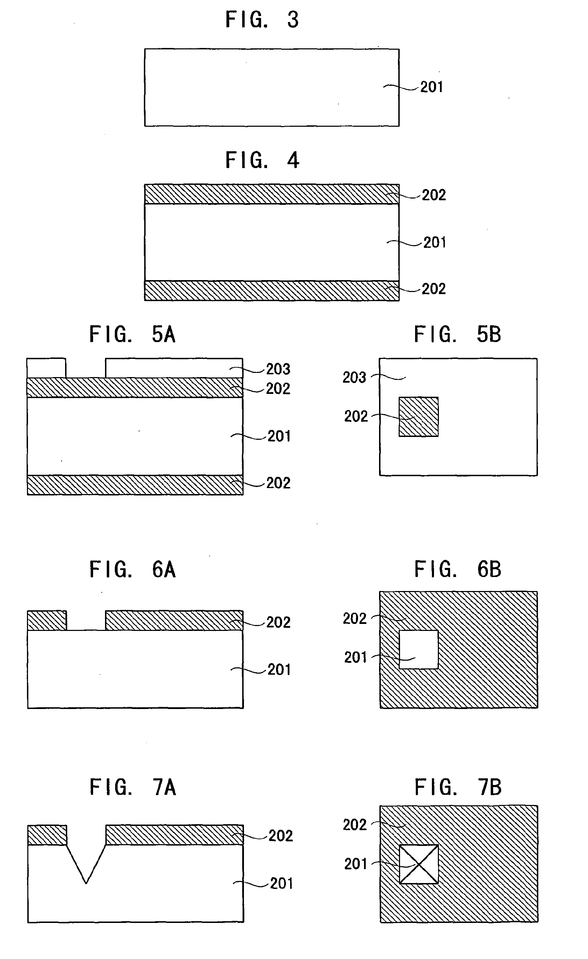

The support member 130 is a base for supporting the recording / reproducing head 100. The support member 130 may or may not have electric conductivity. Moreover, as described later, the support member 130 and the diamond tip 110 may be formed in one body (refer to FIG. 3 etc.).

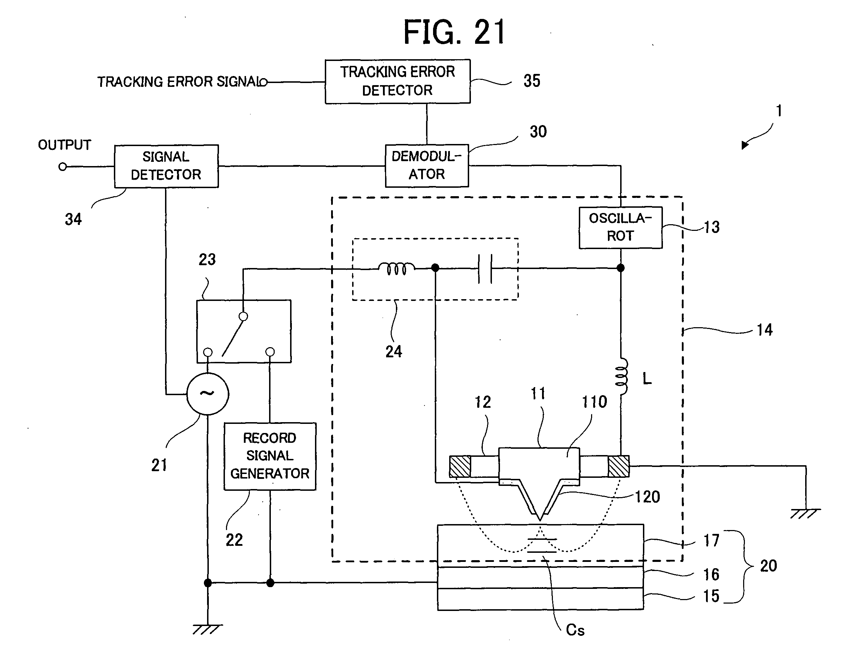

Furthermore, as described later, the support member 130 constitutes a part of a resonance circuit in the reproduction operation as a part of a probe 11 (refer to FIG. 21). Thus, it is possible to select the material in accordance with the inductance of the support member 130 so as to obtain a desired resonance frequency (oscillation frequency). Moreover, by selecting the material in this manner, it is also possible to change the vibration frequency of the probe 11, as occasion demands.

FIG. 1B is a plan view when the recording / reproducing head 100 shown in FIG. 1A is observed from the bottom side (i.e. the side covered with the conductive film 120). The tip portion of the diamond tip 110 is exposed from the conductive film 120. Incidentally, in FIG. 1B, the conductive film 120 does not cover the entire surface of the support member 130 (more specifically, a portion corresponding to a support base 130a), but it is enough if the conductive film 120 can be electrically connected to an alternating current (AC) signal generator 21 and a record signal generator 22 in a dielectric recording / reproducing apparatus 1, as described later.

Incidentally, the tip radius of the tip portion of the diamond tip 110 which protrudes from the conductive film 120 is approximately from 10 to 50 nm. However, even in the case of more than or less than the above-described diameter, it is possible to receive the same benefits. This tip radius is a significant factor to determine the radius of the polarization formed correspondingly to the record data recorded onto the dielectric recording medium 20 (refer to FIG. 22) as described later. Thus, it is preferably extremely small, on the order of 10 nm.

The support member 130 is unified with the support base 130a. Specifically, the support base 130a is fixed, and the support member 130 is unified with the support base 130a such that the support member 130 can move (or wobble or oscillate) slightly as a cantilever in accordance with its elasticity. Even in this case, the support member 130 and the support base 130a may be collectively referred to as the support member 130.

Now, as the recording / reproducing head of the conventional dielectric recording / reproducing apparatus, such a recording / reproducing head that alloy which has electric conductivity, such as platinum iridium, is deposited on a silicon substrate is used. However, such a recording / reproducing head has the problem that the lifetime of use is short because the tip is abraded or grinded in contacting the dielectric recording medium.

According to the recording / reproducing head in the embodiment, a hard member, such as the diamond tip 110, protrudes from one end of the conductive film 120, so that it is possible to prevent deterioration caused by the abrasion and grinding in contacting the dielectric recording medium. Namely, the diamond tip 110 is used as a main factor to prevent the abrasion of the conductive film 120 or the like. By this, it is possible to realize the recording / reproducing head which is highly resistant to the deterioration, such as abrasion and grinding. Consequently, it is possible to extend the lifetime of use of the recording / reproducing head.

Moreover, the mere use of the diamond tip 110 is not enough and there will remain difficulty in the use as the recoding / reproducing head because of the magnitude of the electric resistance of the diamond tip 110. Thus, by using diamond having electric conductivity as the diamond tip 110, and coating the conductive film 120 on its surface, it is possible to reduce the electric resistance with respect to an electric field which is applied to between the recording / reproducing head 100 and the dielectric recording medium 20. This is because a path (i.e. electricity passage) of the electric field (or an electric current) flown in the diamond tip 110 can be shorten. Namely, the electric field is applied to between the recording / reproducing head 100 and the dielectric recording medium 20 via a very short path corresponding to the tip of the diamond tip 110 and a path in the conductive film 120. This gives such a significant advantage that it is possible to inhibit the attenuation of a signal which is read or recorded by the recording / reproducing head 100, as described later.

Incidentally, as shown in FIG. 1C, the tip of the diamond tip 110 may be rounded. With respect to the extent of the rounded shape, it may be sphere or may have a shape with a constant radius. Alternatively, a shape without angular portions will suffice. By this, it is possible to stabilize the contact with the dielectric recording medium 20 in the record and reproduction operations. Moreover, it is possible to reduce useless discharge (i.e. useless application of the electric field) between the diamond tip 110 and the dielectric recording medium 20, to thereby reduce electricity consumption and improve the efficiency of the record and reproduction operations.

Moreover, the tip of the diamond tip 110 does not necessarily protrude from the conductive film 120, and as show in FIG. 2A, it may be constructed such that the tip (the tip surface) of the diamond tip 110 and the edge portion of the conductive film 120, which surrounds the tip, are located on the same surface or substantially the same surface. Even in such a construction, it is possible to receive the same benefits as those of the recording / reproducing head 100 shown in FIG. 1A to FIG. 1C.

FIG. 2B is a schematic diagram of a recording / reproducing head 102 shown in FIG. 2A, viewed from the bottom side. As shown in FIG. 2B, the tip (the tip surface) of the diamond tip 110 is located on substantially the same surface as the edge portion of the conductive film 120 which surrounds the tip. Thus, the tip (the tip surface) of the diamond tip 110 is preferably flat, as opposed to the recording / reproducing head 100 shown in FIG. 1A to FIG. 1C. Even in this case, however, it is possible to make the tip of the diamond tip 110 rounded, as in a recording / reproducing head 101 as shown in FIG. 1C.

Moreover, even if the diamond tip 110 is not formed at one end portion of the support member 130, as shown in FIG. 2C, the diamond tip 110 may be formed at a predetermined position of the support member 130, for example.

(ii) Production Method for Recording / Reproducing Head

Next, with reference to FIG. 3 to FIGs. 20, the production method for the recording / reproducing head in the embodiment will be explained. FIG. 3 to FIGs. 20 conceptually show each process of the production method for the recording / reproducing head in the embodiment.

Incidentally, the recording / reproducing head produced in the production method which will be explained here is such that the diamond tip 110 and the support member 130 are unified. However, even if the diamond tip 110 and the support member 130 are not unified, the recording / reproducing head can be produced in the same production method, and it is obvious that such a production method is also included in the scope of the present invention.

At first, as shown in FIG. 3, a silicon substrate 201 is prepared. The silicon substrate 201 mainly becomes a mold for the recording / reproducing head. Incidentally, it is preferable to prepare such a silicon substrate 201 that a silicon dioxide film is formed along (or in parallel with) its (100) surface in a crystal lattice structure in a later process. This is, as described later, to form the projective (or pyramid-like) shape of the diamond tip 110 by performing anisotropic etching. The silicon substrate 201 is referred to as a (100) substrate.

Then, as shown in FIG. 4, silicon dioxide ($SiO_2$) films 202 are formed with respect to a front surface (or an upper surface in FIG. 4) and back surface (or a downside surface in FIG. 4) of the silicon substrate 201. In this case, the silicon dioxide films 202 may be formed on the surfaces by providing the silicon substrate 201 under an oxidizing atmosphere at high temperature.

Then, as shown in FIG. 5A, a photoresist 203 is coated by spin coating method, for example, and patterning is performed. Specifically, after the photoresist 203 is coated onto the silicon dioxide film 202 formed on one of the surfaces of the silicon substrate 201, ultraviolet rays or the like are irradiated thereon with a photo mask in which a portion corresponding to the diamond tip 110 is patterned. Then, by developing it, the patterning of the photoresist 203 is performed as shown in FIG. 5A.

Incidentally, FIG. 5B shows the silicon substrate 201 etc. in FIG. 5A viewed from the top side (i.e. from the side where the photoresist 203 is patterned). As shown in FIG. 5B, in the portion where the diamond tip 110 of the recording / reproducing head 100 will be formed later, a window (or space portion) at which the photoresist 203 is not coated can be seen. The diamond tip 110 will be formed later in accordance with the shape of this window.

Then, as shown in FIG. 6A, etching is performed with respect to the silicon substrate 201 in which the photoresist 203 is patterned as shown in FIGs. 5. Here, for example, BHF (Buffered HydroFluoric acid) or the like is used to perform the etching with respect to the portion where the photoresist 203 is not coated out of the silicon dioxide film 202. However, other etchant may be used for the etching, or dry etching may be performed for the etching.

After the etching of the silicon dioxide film 202, the photoresist 203 is removed. Here, the removal of the photoresist 203 may be performed by dry etching or wet etching.

FIG. 6B shows the silicon substrate 201 etc. in FIG. 6A viewed from the top side. As shown in FIG. 6B, in the portion where the diamond tip 110 will be formed later, a window at which the silicon dioxide film 202 is not coated can be seen, and the silicon substrate 201 can be seen at the window.

Then, as shown in FIG. 7A, anisotropic etching is performed with respect to the silicon substrate 201. Here, for example, alkaline etchant, such as TMAH (TetraMethyl Ammonium Hydroxide) and KOH (Potassium Hydroxide), is used for the anisotropic etching.

Here, the silicon substrate 201 has such a property that the etching can be performed in the normal direction of the (100) surface (i.e. a direction perpendicular to the silicon substrate 201 in FIG. 7A), but it is relatively difficult to perform the etching in the normal direction of the (111) surface (i.e. a direction of injecting at approximately 45 degrees with respect to the silicon substrate 201 in FIG. 7A). To perform the anisotropic etching by using this property, the silicon substrate 201 is etched such that it has a shape corresponding to the diamond tip 110 (i.e. a projection shape or pyramid shape).

Incidentally, FIG. 7B shows the silicon substrate 201 etc. in FIG. 7A viewed from the top side. The anisotropic etching is performed with respect to the silicon substrate 201, as shown in FIG. 7B, and an etching rate is lower in a position closer to the outer portion of the window of the silicon dioxide film 202, and the etching rate is higher in a position closer to the center of the window. As a result, the hole formed by the etching has a sharp, pointed shape.

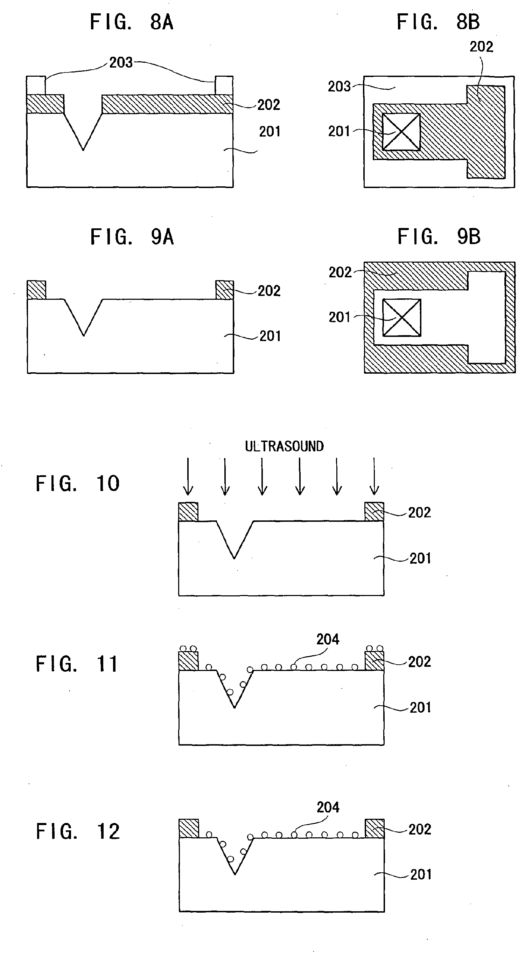

Then, as shown in FIG. 8A, the photoresist 203 is coated again for patterning.

Incidentally, FIG. 8B shows the silicon substrate 201 etc. in FIG. 8A viewed from the top side. As shown in FIG. 8B, the photoresist 203 in this case is patterned in accordance with the shape of the support member 130.

Then, as shown in FIG. 9A, etching is performed with respect to the silicon dioxide film 202 in accordance with the patterning of the photoresist 203 as shown in FIGs. 8, and then, the photoresist 203 is removed. The etching here is performed in the same procedure as in FIGs. 6.

Incidentally, FIG. 9B shows the silicon substrate 201 etc. in FIG. 9A viewed from the top side. As shown in FIG. 9B, the silicon dioxide film 202 remains in accordance with the shape of the support member 130.

Then, as shown in FIG. 10, in methanol containing diamond powders, the surfaces of both the silicon substrate 201 and the silicon dioxide film 202 formed thereon are scratched, by vibrating the diamond powders by using ultrasound or the like, for example. By scratching the surfaces as described above, diamond nuclei can be formed in the following process (refer to FIG. 11).

Then, as shown in FIG. 11, a diamond film is grown by Hot Filament CVD (Chemical Vapor Deposition). For example, using $CH_4$ (methane) gas as a material, the diamond film is formed on the silicon substrate 201. In particular, the diamond film grows at the position of the scratch which is made in the process in FIG. 10. Incidentally, not only Hot Filament CVD, but also Microwave Plasma CVD or other film growth methods or the like may be used to grow the diamond film.

Moreover, the diamond film is used as the above-described diamond tip 110, so that it requires electric conductivity. Therefore, B (Boron) is doped into the diamond film by adding a doping gas, such as $B_2H_6$ (diborane) and $(CH_3O)_3B$ (trimethoxy boron).

Incidentally, the method of growing the diamond film is not limited to the one by the scratch process as shown in FIG. 10. The diamond film may be grown by applying a negative bias voltage to the silicon substrate 201 at the initial stage of the CVD process, or by applying ultra micro diamond powders to the silicon substrate 201, to thereby use the ultra micro diamond powders as the nuclei for growing the diamond film.

Then, as shown in FIG. 12, diamond particles which are growing on the silicon dioxide film 202 are removed. The removal of an extremely small amount of silicon dioxide film 202 by way of etching with BHF or the like can result in the removal of the diamond particles. By this, it is possible to form the diamond tip 110 and the support member 130 which have appropriate shapes.

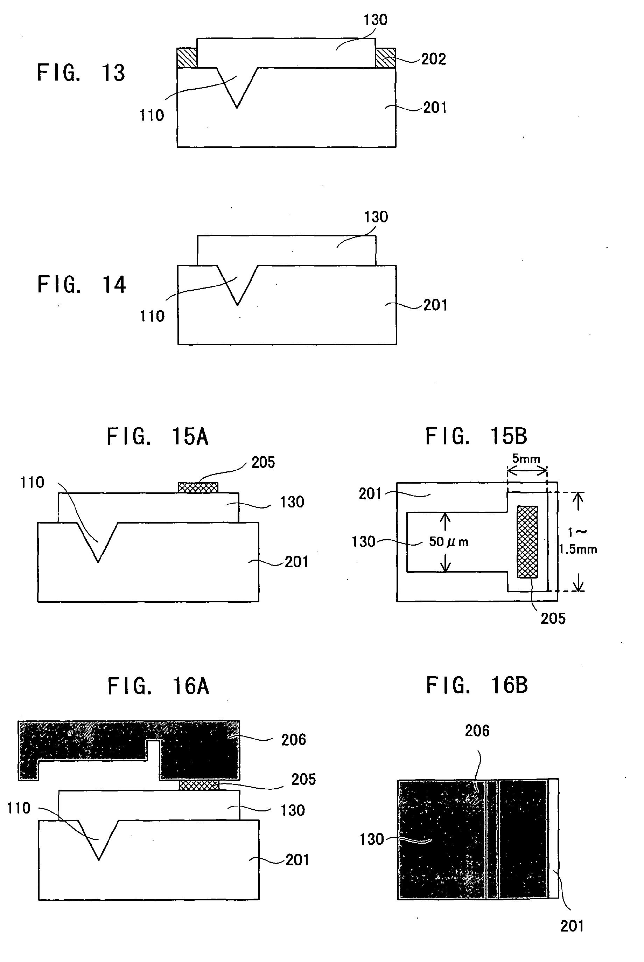

Then, as shown in FIG. 13, the diamond film is further grown by using Hot Filament CVD or the like, for example, to thereby form the diamond tip 110 and the support member 130.

Incidentally, in this case, the support member 130 and the diamond tip 110 are formed in one body, so that in the explanation below, the diamond tip 110 shall include a function as the support member 130.

Then, after the diamond tip 110 is formed, etching is performed, as shown in FIG. 14, and the silicon dioxide film 202 is removed. Here, for example, BHF or the like is used to remove the silicon dioxide film 202.

Then, as shown in FIG. 15A, photosensitive polyimide 205 is formed on a surface opposite to the side where the portion corresponding to thediamond tip 110 is formed, in the portion corresponding to the support member 130. The photosensitive polyimide 205 is used for attachment to a glass 206 (refer to FIGs. 16) for supporting or maintaining the entire recording / reproducing head in a later process.

Incidentally, FIG. 15B shows the silicon substrate 201 etc. in FIG. 15A viewed from the top side. As shown in FIG. 15B, the photosensitive polyimide 205 is patterned on a portion opposite to a portion extending in the longitudinal direction out of the portion corresponding to the support member 130 (i.e. on a support base 130a).

Incidentally, with respect to the specific size of the recording / reproducing head shown in FIG. 15B, the portion extending in the longitudinal direction is preferably 50 µm or less wide. Then, preferably, the portion opposite to the portion extending in the longitudinal direction is approximately 5 mm$\times$ 1~1.5 mm. However, they are not limited to the above size. With respect to the shape thereof, it is not limited to a T-shape as shown in FIG. 15B, but it may be other shapes such as a L-shape.

In this case, the support member 130 is unified with a support base 130a. The support base 130a is fixed, and the support member 130 is unified with the support base 130a such that the support member 130 can move (or wobble or oscillate) slightly as a cantilever in accordance with its elasticity. Even in this case, the support member 130 and the support base 130a may be collectively referred to as the support member 130.

Then, as shown in FIG. 16A, the glass 206 to which a groove-cutting process is performed is attached to the photosensitive polyimide 205. The glass 206 is a member for supporting or maintaining the entire recording / reproducing head. By connecting an actuator or the like to the glass 206, it is possible to displace the recording / reproducing head on or above the dielectric recording medium, in the recording and reproduction operations of the dielectric recording / reproducing apparatus described later.

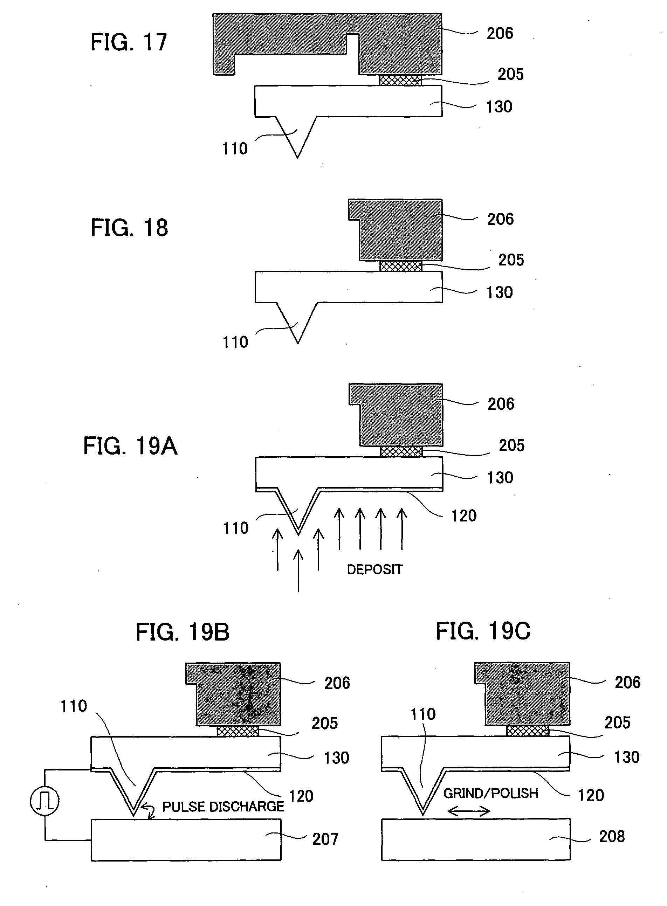

Incidentally, the groove-cutting machining is performed to the glass 206, by forming a cut in the vicinity of the center of the glass 206. This is formed to easily break the glass 206 in a process described later (refer to FIG. 18).

Incidentally, FIG. 16B shows the silicon substrate 201 etc. in FIG. 16A viewed from the top side. As shown in FIG. 16B, the glass 206 is large enough to cover the whole diamond tip 110. However, the size of the glass 206 shown in FIG. 16B is merely an example. Even if the glass 206 is larger than or smaller than this size, it is enough if it has a size to support the entire recording / reproducing head.

Then, as shown in FIG. 17, the silicon substrate 201 is removed. Here, the silicon substrate 201 is removed from the diamond tip 110 by using RIE (Reactive Ion Etching). However, other methods may be also used to remove the silicon substrate 201.

Then, as shown in FIG. 18, the glass 206 is broken along the cut, to make the finished product available as the probe 11 described later. The processes until this correspond to one specific example of the "first forming process" in the present invention.

Then, afterward, the conductive film 120 is formed on the surface of the diamond tip 110 and the support member 130 (i.e. the "second forming process" in the present invention). And then the tip of the diamond tip 110 is exposed (i.e. the "exposing process" in the present invention). Incidentally, there are shown three methods to explain in the embodiment.

At first, a first method will be explained. As shown in FIG. 19A, a film of metal, which has electric conductivity, is formed on the surface on the bottom side of the diamond tip 110 and the support member 130 (i. e. the surface on the side where the glass 206 etc. are not attached). For example, a deposition method may be used to form the film of metal (i.e. the conductive film 120) on the entire surface on the bottom side of the diamond tip 110 and the support member 130.

As the conductive film 120, for example, alloy, such as platinum palladium and platinum iridium, can be used, as described above. Incidentally, in order to increase the adherence of the alloy with respect to the diamond tip 110, it is preferable that after a foundation, such as titanium, is deposited, the alloy is deposited, to form the conductive layer 120. By this, it is possible to increase the adherence between the conductive film 120 and the diamond tip 110, to thereby produce the recording / reproducing head which is more highly resistant to the deterioration such as abrasion.

Then, as shown in FIG. 19B, a pulse voltage is applied to between the tip of the diamond tip 110 and an electrode 207, which is prepared separately. Namely, pulse discharge is performed. As a result a part of the conductive film 120 formed on the tip portion of the diamond tip 110 is exfoliated or peeled off. By this, it is possible to produce such a recording / reproducing head 100 that the tip of the diamond tip 110 protrudes from the conductive film 120, as shown in FIG. 1A.

Moreover, by controlling the pulse voltage which is applied, it is possible to control the amount and shape of the part of the conductive film 120 which is exfoliated from the tip. Incidentally, it is possible to produce such a recording / reproducing head 101 that the tip portion of the diamond tip 110 is rounded, as shown in FIG. 1C, or such a recording / reproducing head 102 that the surface of the tip portion of the diamond tip 110 is located on the same surface as the edge portion of the conductive film 120.

Next, a second method will be explained. The same procedure is performed until the deposition of the conductive film 120, as in the first method described above. Then, as shown in FIG. 19C, the tip portion of the diamond tip 110 is moved on a grinding or polishing plate 208, especially along the surface of the grinding or polishing plate 208, to thereby grind, polish or exfoliate the conductive film 120 which is formed on the tip. By this, it is possible to produce the recording / reproducing head 102 shown in FIG. 2A. Moreover, by changing the grinding or polishing direction, or by grinding or polishing while changing the inclination of the recording / reproducing head, it is possible to produce the recording / reproducing head 100 shown in FIG. 1A or the recording / reproducing head 101 shown in FIG. 1C.

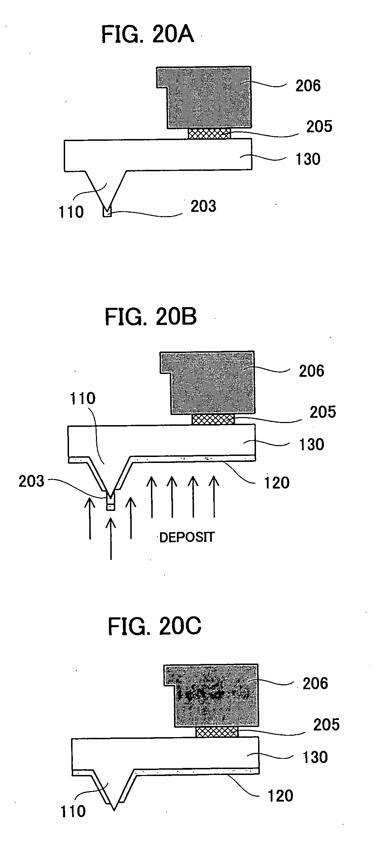

Next, a third method will be explained. As shown in FIG. 20A, the photoresist 203 is coated onto the tip portion of the diamond tip 110. Then, as shown in FIG. 20B, with respect to the surface on the bottom side of the diamond tip 110 and the support member 130 after the coating of the photoresist 203, the conductive film 120 is deposited. The deposition at this time is performed in the same method as the above-described deposition shown in FIG. 19A.

Then, as shown in FIG. 20C, by removing the photoresist 203, it is possible to produce the recording / reproducing head 100 shown in FIG. 1A.

Incidentally, the production method for the recording / reproducing head in the embodiment, which is explained in FIG. 3 to FIGs. 20, is merely one specific example, and it is possible to change raw materials, various methods (i.e. the etching method, the film formation method and the film growth method), or the like used in each process, as occasion demands.

(2) Embodiment of Recording / Reproducing Apparatus

Next, the recoding / reproducing apparatus which uses the recording / reproducing head in the embodiment described above will be explained.

(i) Basic Structure

At first, the basic structure of the dielectric recording / reproducing apparatus in the embodiment will be explained with reference to FIG. 21. FIG. 21 conceptually shows the basic structure of the dielectric recording / reproducing apparatus in the embodiment.

The dielectric recording / reproducing apparatus 1 is provided with: the probe 11 for applying an electric field with its tip portion facing a dielectric material 17 of the dielectric recording medium 20; a return electrode 12 for returning the high-frequency electric field for reproduction applied from the probe 11; an inductor L placed between the probe 11 and the return electrode 12; an oscillator 13 which oscillates at a resonance frequency determined from the inductor L and a capacitance Cs in a portion formed in the dielectric material 17 under the probe 11 and polarized correspondingly to the record information; the alternating current (AC) signal generator 21 for applying an alternating electric field which is intended to detect the polarization condition recorded in the dielectric material 17; the record signal generator 22 for recording the polarization condition into the dielectric material 17; a switch 23 for switching outputs from the AC signal generator 21 and the record signal generator 22; a High Pass Filter (HPF) 24; a demodulator 30 for demodulating a FM signal modulated by the capacitance Cs corresponding to the polarization condition owned by the dielectric material 17 under the probe 11; a signal detector 34 for detecting data from the demodulated signal; a tracking error detector 35 for detecting a tracking error signal from the demodulated signal; and so on.

As the probe 11, the recording / reproducing head 100 in the embodiment described above is used. Out of the probe 11, the conductive film 120 is connected to the oscillator 13 via the HPF 24, and connected to the AC signal generator 21 and the record signal generator 22 via the HPF 24 and the switch 23. Then, the probe 11 functions as an electrode for applying an electric field. Incidentally, as the probe 11, for example, a cantilever shape or a needle shape, as in FIGs. 1 and FIGs. 2, and the like are known as its specific shape.

Incidentally, it is also possible that a plurality of probes 11 are provided. In this case, a plurality of AC signal generators 21 are preferably provided for the respective probes 11. Moreover, in order to distinguish, on the signal detector (detectors) 34, reproduction signal corresponding to each of a plurality of AC signal generators 21, it is preferable that a plurality of signal detectors 34 are provided and that each of the signal detectors 34 obtains reference signal from the corresponding AC signal generator 21, to thereby output the corresponding reproduction signal.

In the case that the plurality of probes 11 are provided, it is required that the diamond tips 110 and the conductive films 120 are insulated for each probe 11. Then, if the support members 130 have electric conductivity, it is also required that the support members 130 are also insulated. If the support members 130 do not have electric conductivity, the support member 130 common to the diamond tips 110 and the conductive films 120 of each probe 11 may be provided.

The return electrode 12 is an electrode for returning the high-frequency electric field applied to the dielectric material 17 from the probe 11 (i.e. a resonance electric field from the oscillator 13), and is placed to surround the probe 11. Incidentally, the shape and placement of the return electrode 12 can be arbitrarily set as long as the high-frequency electric field can return to the return electrode 12.

The inductor L is placed between the probe 11 and the return electrode 12, and may be formed using a microstripline, for example. The inductor L and the capacitance Cs constitute the resonance circuit 14. The inductance of the inductor L is determined such that this resonance frequency is approximately 1 GHz, for example.

The oscillator 13 is an oscillator which oscillates at the resonance frequency determined from the inductor L and the capacitance Cs. The resonance frequency varies, depending on the change of the capacitance Cs. Therefore, FM modulation is performed correspondingly to the change of the capacitance Cs determined by the polarization domain corresponding to the recorded data. By demodulating this FM modulation signal, it is possible to read the data recorded in the dielectric recording medium 20.

Incidentally, as described in detail later, the probe 11, the return electrode 12, the oscillator 13, the inductor L, the HPF 24, and the capacitance Cs in the dielectric material 17 constitute the resonance circuit 14. The FM signal amplified on the oscillator 13 is outputted to the demodulator 30.

The AC signal generator 21 applies an alternating electric field to between the return electrode 12 and an electrode 16. The frequency of the alternating electric field is approximately 5kHz, and the alternating electric field is applied to the domain of the dielectric material 17. In the dielectric recording / reproducing apparatus having the plurality of proves 11, the frequencies of the alternating electric fields are used as reference signals in the signal detector (detectors) 34 to distinguish reproduction signals detected with the probes 11.

The record signal generator 22 generates a signal for recording (hereinafter referred to as a "record signal"), which is supplied to the probe 11 at the time of recording. This record signal is not limited to a digital signal but may be an analog signal. This record signal includes various signals, such as audio data, video data, and digital data for a computer. An AC signal which is superimposed to the record signal is used, as a reference signal in the reproduction operation, to distinguish and reproduce the reproduction signal of each probe 11.

The switch 23 selects its output to supply an AC signal (the alternating electric field) from the AC signal generator 21 at the time of reproducing, or a record signal from the record signal generator 22 at the time of recording, to the probe 11. A mechanical relay or a semiconductor circuit may be used for this device. In the case of the analog signal, the relay is preferably provided, and in the case of the digital signal, the semiconductor circuit is preferably provided.

The HPF 24 includes an inductor and a condenser. The HPF 24 is used to constitute a high pass filter for cutting off a signal system to prevent the signals obtained from the AC signal generator 21 and the record signal generator 22 from interfering with the oscillation of the oscillator 13. The cut-off frequency is $f=1/\{2\pi\sqrt{(LC)}\}$, wherein L is the inductance of the inductor included in the HPF 24, and C is the capacitance of the condenser included in the HPF 24. The frequency of the AC signal is approximately 5KHz, and the resonance frequency of the oscillator 13 is approximately 1GHz, so that the separation at a first LC filter can be performed sufficiently. A higher-order filter may be used, but since the number of elements increases, the size of the apparatus may be increased.

The demodulator 30 demodulates the resonance frequency of the oscillator 13, which is FM-modulated due to the small change of the capacitance Cs, and reconstructs a waveform corresponding to the polarized condition of a portion which is traced by the prove 11. If the recorded data are digital data of "0" and "1", there are two types of frequencies which are modulated, and the data is reproduced easily by distinguishing the frequencies.

The signal detector 34 reproduces the recorded data from the signal demodulated on the demodulator 30. A lock-in amplifier is used as the signal detector 34, for example, and synchronized detection is performed on the basis of the frequency of the alternating electric field of the AC signal generator 21, to thereby reproduce the data. Incidentally, it is obvious that other phase detection devices may be used.

The tracking error detector 35 detects a tracking error signal for controlling the apparatus (especially, tracking operation), from the signal demodulated on the demodulator 30. The detected tracking error signal is inputted into a tracking mechanism for the control.

Next, one example of the dielectric recording medium 20 shown in FIG. 21 will be explained with reference to FIG. 22A and FIG. 22B. FIG. 22A and FIG. 22B conceptually show one example of the dielectric recording medium 20 used in the embodiment.

As shown in FIG. 22A, the dielectric recording medium 20 is a disc-shaped dielectric recording medium, and is provided with: a center hole 10, an inner area 7, a record area 8, and an outer area 9 The inner area 7, the record area 8, and the outer area 9 are placed concentrically from the center hole 10 in this order. The center hole 10 is used in the case where the dielectric recording medium 20 is mounted on a spindle motor or the like.

The record area 8 is an area to record the data therein and has tracks and spaces between the tracks.

Moreover, on the tracks and the spaces, such areas are provided that record therein control information associated with the record and reproduction. Furthermore, the inner area 7 and the outer area 9 are used to recognize the inner position and the outer position of the dielectric recording medium 20, respectively, and can be used as areas to record therein information about the data which is recorded, such as a title, its address, a recording time length, and a recording capacity. Incidentally, the above-described construction is one example of the dielectric recording medium 20, and other construction, such as a card-shape, can be also adopted.

Moreover, as shown in FIG. 22B, the dielectric recording medium 20 is formed such that the electrode 16 is laminated on a substrate 15 and that the dielectric material 17 is laminated on the electrode 16.

The substrate 15 is Si (silicon), for example, which is a preferable material in its strength, chemical stability, workability, or the like. The electrode 16 is intended to apply an electric field between the electrode 16 and the probe 11 (or the return electrode 12). By applying such an electric field to the dielectric material 17 that is greater than the coercive electric field of the dielectric material 17, the polarization direction is determined. By determining the polarization direction in accordance with the data, the record operation is performed.

The dielectric material 17 is formed by using a known technique, such as spattering method of $LiTaO_3$ or the like, which is a ferroelectric substance, onto the electrode 16. The record operation is performed with respect to such a Z surface of LiTaO3 that the plus and minus surfaces of the polarization have a 180-degree domain relationship. It is obvious that other dielectric materials may be used. The dielectric material 17 forms the small polarization at high speed by using a direct current bias voltage and a voltage for the data which are both applied at the same time.

Alternatively, as the shape of the dielectric recoding medium 20, for example, there are a disc shape and a card shape and the like. The displacement of the relative position with the probe 11 is performed by the rotation of the dielectric recording medium 20, or by displacing linearly either the probe 11 or the dielectric recording medium 20.

(ii) Operation Principle

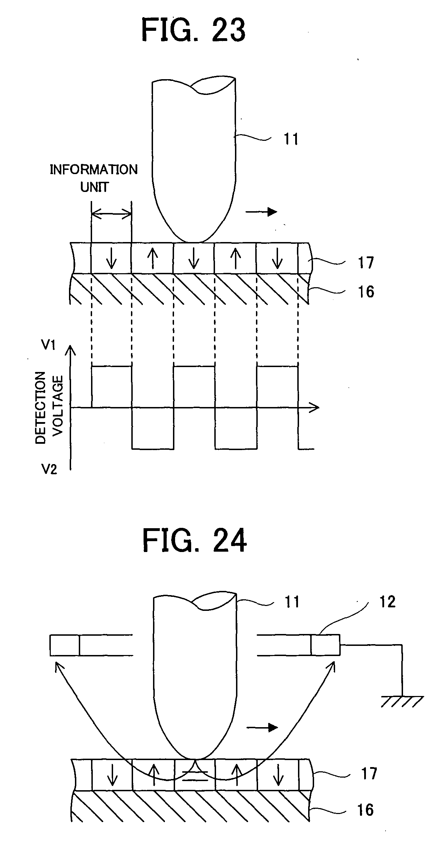

Next, with reference to FIG. 23 and FIG. 24, the operation principle of the dielectric recording / reproducing apparatus 1 in the embodiment will be explained. Incidentally, in the explanation below, apart of the constituent elements of the dielectric recoding / reproducing apparatus 1 shown in FIG. 21 is extracted and explained.

(Record Operation)

At first, with reference to FIG. 23, the record operation of the dielectric recording / reproducing apparatus 1 in the embodiment will be explained. FIG. 23 conceptually shows the record operation of recording the information.

As shown in FIG. 23, by applying an electric field which is greater than the coercive electric field of the dielectric material 17 to between the probe 11 and the electrode 16, the dielectric material 17 is polarized having directions corresponding to the direction of the applied electric field. Then, by controlling an applied voltage (an applied electric field) to change the polarization direction, it is possible to record predetermined information. This uses such a property that the polarization direction is reversed when an electric field greater than the coercive electric field of a dielectric substance (particularly, a ferroelectric substance) is applied to the dielectric substance and that the polarization direction is maintained after stopping applying the electric field.

For example, it is assumed that the domains have a downward polarization P when an electric field is applied from the probe 11 to the electrode 16, and that the domains have an upward polarization P when an electric field is applied from the electrode 16 to the probe 11. This corresponds to a condition where the information is recorded. If the probe 11 is moved in a direction shown with the arrow, a detection voltage is outputted as a rectangular wave having a high level or a low level (i.e. the digital signal), correspondingly to the polarization P. Incidentally, this level varies depending on the extent of the polarization P, to thereby allow the recording as the analog signal.

Particularly in the embodiment, the path of an electric field is formed close to the tip portion of the probe 11 (i.e. the tip portion of the diamond tip 110), via the conductive film 120 constituting the probe 11, and the electric filed is applied to ( or from) the dielectric material 17 from (or to) the tip portion of the diamond tip 110. Namely, it is possible to shorten the path of the electric field passing through the diamond tip 110, to thereby reduce the electric resistance value of the probe 11. In addition, as descried above, the deterioration resistance of the probe 11 is increased, so that it is possible to inhibit the deterioration caused by contact with the dielectric material 17 or the like, and it is also possible to extend the lifetime of use of the probe 11.

(Reproduction Operation)

Next, with reference to FIG. 24, the reproduction operation of the dielectric recording / reproducing apparatus 1 in the embodiment will be explained. FIG. 24 conceptually shows the reproduction operation of reproducing the information.

The non-linear dielectric constant of a dielectric substance changes correspondingly to the polarization direction of the dielectric substance. The non-linear dielectric constant of the dielectric substance can be detected as a difference in the capacitance of the dielectric substance or a difference in the change of the capacitance, when an electric field is applied to the dielectric substance. Therefore, by applying an electric field to a dielectric material and detecting, at that time, a difference in the capacitance Cs or a difference in the change of the capacitance Cs in a certain domain of the dielectric material, it is possible to read and reproduce the data recorded as the polarization direction of the dielectric material.

Specifically, at first, as shown in FIG. 24, an alternating electric field from the not-illustrated AC signal generator 21 is applied to between the electrode 16 and the probe 11. The alternating electric field has such an electric field strength that is not beyond the coercive electric field of the dielectric material 17, and has a frequency of approximately 5kHz, for example. The alternating electric field is generated mainly to distinguish the difference in the change of the capacitance corresponding to the polarization direction of the dielectric material 17. Incidentally, in place of the alternating electric field, a direct current bias voltage may be applied to form an electric field in the dielectric material 17. The application of the alternating electric field causes the generation of an electric field in the dielectric material 17 of the dielectric recording medium 20.

Then, the probe 11 is approached to the recording surface until the distance between the tip of the probe 11 and the recording surface becomes extremely small on the order of nanometers. Under this condition, the oscillator 13 is driven. Incidentally, in order to detect the capacitance Cs of the dielectric material 17 under the probe 11 highly accurately, it is preferable to contact the probe 11 with the surface of the dielectric material 17, i.e. the recording surface. However, in order to read the data recorded in the dielectric material 17 at high speed, it is necessary to relatively displace the probe 11 on the dielectric recording medium 20 at high speed. Thus, in view of reliability in the high-speed displacement, and the prevention of damage caused by the collision and friction between the probe 11 and the dielectric recording medium 20, or the like, it is practically better to make the probe 11 approach the recording surface close enough to regard this as the actual contact (i.e. substantially contact), than make the probe 11 contact the recording surface.

Particularly in the embodiment, as shown in FIGs. 1 and FIGs. 2, the probe 11 is shaped such that the diamond tip 110 protrudes at the tip portion of the probe 11. Or the probe 11 is shaped such that the diamond tip 110 (especially, the tip portion of the diamond tip 110) prevents the deterioration of the conductive film 120 such as the abrasion. Therefore, even if the probe 11 directly contacts the dielectric recording medium 20, it is no problem in view of the deterioration caused by the abrasion of the probe 11 or the like.

Then, the oscillator 13 oscillates at the resonance frequency of the resonance circuit, which includes the inductor L and the capacitance Cs associated with the dielectric material 17 under the probe 11 as the constituent factors. The central frequency of the resonance frequency is set to approximately 1GHz, as described above.

Here, the return electrode 12 and the probe 11 constitute a part of the resonance circuit 14 including the oscillator 13. The high-frequency signal of approximately 1GHz, which is applied to the dielectric material 17 from the probe 11, passes through the dielectric material 17 and returns to the return electrode 12, as shown with solid lines in FIG. 24. By placing the return electrode 12 in the vicinity of the probe 11 and shortening a feedback route to the resonance circuit 14 including the oscillator 13, it is possible to reduce a chance of noise (e. g. floating capacitance) entering the resonance circuit 14.

In addition, the change of the capacitance Cs corresponding to the non-linear dielectric constant of the dielectric material 17 is extremely small, and in order to detect this change, it is necessary to adopt a detection method having high detection accuracy. In a detection method using FM modulation, generally, it is possible to achieve the high detection accuracy, but it is necessary to further improve the detection accuracy to likely detect the small capacitance change corresponding to the non-linear dielectric constant of the dielectric material 17. Thus, in the dielectric recording / reproducing apparatus 1 in the embodiment (i.e. a recording / reproducing apparatus which uses the SNDM principle), the return electrode 12 is placed in the vicinity of the probe 11 to shorten the feedback route (the feedback path) to the resonance circuit 14 as much as possible. By this, it is possible to obtain extremely high detection accuracy, and thus it is possible to detect the small capacitance change corresponding to the non-linear dielectric constant of the dielectric substance.

After the oscillator 13 is driven, the probe 11 is displaced in parallel with the recording surface on the dielectric recording medium 20. By the displacement, the domain of the dielectric material 17 under the probe 11 is changed, and whenever its polarization direction changes, the capacitance Cs changes. If the capacitance Cs changes, the resonance frequency (the oscillation frequency) of the oscillator 13 changes. As a result, the oscillator 13 outputs a signal which is FM-modulated on the basis of the change of the capacitance Cs.

This FM signal is frequency-voltage converted by the demodulator 30. As a result, the change of the capacitance Cs is converted to the change of a voltage. The change of the capacitance Cs corresponds to the non-linear dielectric constant of the dielectric material 17. The non-linear dielectric constant corresponds to the polarization direction of the dielectric material 17. The polarization direction corresponds to the data recorded in the dielectric material 17. Therefore, a signal obtained from the demodulator 30 is a signal whose voltage changes correspondingly to the data recorded in the dielectric recording medium 20. Moreover, the signal obtained from the demodulator 30 is supplied to the signal detector 34, and the data recorded in the dielectric recording medium 20 is extracted by the synchronized detection, for example.

At this time, in the signal detector 34, the AC signal generated by the AC signal generator 21 is used as a reference signal. This makes it possible to extract the data highly accurately, by referring the reference signal (i.e. synchronizing with the reference signal), as described above, even if the signal obtained from the demodulator 30 includes much noise or the data to be extracted is weak, for example.

Particularly, in the embodiment, the recording / reproducing head shown in FIGs. 1 and FIGs. 2 is used as the probe 11. Therefore, it is possible to reduce the electric resistance value of the probe 11, to thereby reduce the electric resistance in the resonance circuit 14. By this, it is possible to inhibit the attenuation of a signal flown in the resonance circuit 14, and it is possible to reproduce the data more stably. Moreover, since the deterioration resistance of the probe 11 is high, it is possible to extend the lifetime of use of the probe 11.

Moreover, in the above-described embodiment, the dielectric material 17 is used for a recording layer, but from the viewpoint of the presence or absence of spontaneous polarization and the non-linear dielectric constant, the dielectric material 17 is preferably a ferroelectric substance.

**Claims**

1. A recording / reproducing head (100) for performing at least one of a record operation of recording information onto a dielectric recording medium (20) and a reproduction operation of reproducing the information from the dielectric recording medium (20),
   **characterized in that** said recording / reproducing head (100) comprises

   a support member (130) which extends in a longitudinal direction;
   a projection portion (110) which is mounted on said support member (130) such that a tip of said projection portion (110) faces the dielectric recording medium (20); and
   a conductive layer (120) which covers a part other than at least the tip out of said projection portion (110),

   said projection portion (110) containing a harder material than that of said conductive layer (120).

2. The recording / reproducing head (100) according to claim 1, **characterized in that** said conductive layer (120) at least partially covers a surface of said support member (130) on a side where said projection portion (110) is mounted, in addition to the part other than at least the tip out of said projection portion (110).

3. The recording / reproducing head (100) according to claim 1 or 2, **characterized in that** the tip has such a shape that the tip protrudes from an edge of said conductive layer (120) which surrounds the tip.

4. The recording / reproducing head (100) according to any one of claims 1 to 3, **characterized in that** the tip has a rounded shape.

5. The recording / reproducing head (100) according to claim 1 or 2, **characterized in that** the tip has a flat surface, located on a same surface as an edge of said conductive layer (120) which surrounds the tip.

6. The recording / reproducing head (100) according to any one of claims 1 to 5, **characterized in that** said projection portion (110) has electric conductivity.

7. The recording / reproducing head (100) according to claim 6, **characterized in that** said projection portion (110) contains diamond to which impurities are doped.

8. The recording / reproducing head (100) according to claim 7, **characterized in that** said projection portion (110) contains boron as the impurities.

9. The recording / reproducing head (100) according to any one of claims 1 to 8, **characterized in that** said conductive layer (120) contains platinum.

10. The recording / reproducing head (100) according to any one of claim 1 to 5, **characterized in that** said projection portion (110) contains a non-conductive material.

11. The recording / reproducing head (100) according to any one of claims 1 to 10, **characterized in that** said conductive layer (120) is formed on a foundation layer which is more adhesive than said conductive layer (120).

12. A production method of producing a recording / reproducing head (100) for performing at least one of a record operation of recording information onto a dielectric recording medium (20) and a reproduction operation of reproducing the information from the dielectric recording medium (20), said recording / reproducing head (100) comprising: a support member (130) which extends in a longitudinal direction; a projection portion (110) which is mounted on said support member (130) such that a tip of said projection portion (110) faces the dielectric recording medium (20); and a conductive layer (120) which covers a part other than at least the tip out of said projection portion (110), said projection portion (110) containing a harder material than that of said conductive layer (120),

   **characterized in that** said production method comprises:

   a first forming process of forming said support member (130) and said projection portion (110);
   a second forming process of forming said conductive layer (120) to cover at least said projection portion (110); and
   an exposing process of expositing at least the tip.

13. The production method according to claim 12, **characterized in that** in said second forming process, after a foundation layer which is more adhesive than said conductive layer (120) is formed, said conductive layer (120) is formed on the foundation layer.

14. The production method according to claim 12 or 13, **characterized in that** in said exposing process, the tip is exposed by grinding or polishing said conductive layer (120) formed on the tip.

15. The production method according to claim 12 or 13, **characterized in that**
   said second forming process further includes a resist coating process of coating a resist (203) onto at least the tip before said conductive layer (120) is formed, and
   in said exposing process, the tip is exposed by removing the resist.

16. The production method according to claim 12 or 13, **characterized in that** in said exposing process, the tip is exposed by applying a pulse voltage to a part which covers at least the tip out of said conductive layer (120) to exfoliate said conductive layer (120) which covers the tip.

17. A recording apparatus (1) for recording data onto a dielectric recording medium (20),
   **characterized in that** said recording apparatus (1) comprises:

   a recording / reproducing head (100) for performing at least one of a record operation of recording information onto the dielectric recording medium (20) and a reproduction operation of reproducing the information from the dielectric recording medium (20), said recording / reproducing head (100) comprising: a support member (130) which extends in a longitudinal direction; a projection portion (110) which is mounted on said support member (130) such that a tip of said projection portion (110) faces the dielectric recording medium (20); and a conductive layer (120) which covers a part other than at least the tip out of said projection portion (110), said projection portion (110) containing a harder material than that of said conductive layer (120); and

a record signal generating (22) device for generating a record signal corresponding to the data.

18. A reproducing apparatus (1) for reproducing data recorded on a dielectric recording medium (20),
    characterize in that said reproducing apparatus (1) comprises:

    a recording / reproducing head (100) for performing at least one of a record operation of recording information onto the dielectric recording medium (20) and a reproduction operation of reproducing the information from the dielectric recording medium (20), said recording / reproducing head (100) comprising: a support member (130) which extends in a longitudinal direction; a projection portion (110) which is mounted on said support member (130) such that a tip of said projection portion (110) faces the dielectric recording medium (20); and a conductive layer (120) which covers a part other than at least the tip out of said projection portion (110), said projection portion (110) containing a harder material than that of said conductive layer (120);
    an electric field applying device (21) for applying an electric field to the dielectric recording medium (20);
    an oscillating device (13) whose oscillation frequency varies depending on a difference in a capacitance (Cs) corresponding to a non-linear dielectric constant of the dielectric recording medium (20); and
    a reproducing device (34) for demodulating and reproducing an oscillation signal from said oscillating device (13).

## FIG. 1A

100

130

120

110

## FIG. 1B

100

110

120

130

130a

## FIG. 1C

101

130

120

110

## FIG. 2A

102

130

120

110

## FIG. 2B

102

110

120

130

130a

## FIG. 2C

103

130

120

110

# FIG. 3

201

# FIG. 4

202
201
202

# FIG. 5A

203
202
201
202

# FIG. 5B

203
202

# FIG. 6A

202
201

# FIG. 6B

202
201

# FIG. 7A

202
201

# FIG. 7B

202
201

FIG. 8A

FIG. 8B

FIG. 9A

FIG. 9B

FIG. 10

ULTRASOUND

FIG. 11

FIG. 12

FIG. 13

FIG. 14

FIG. 15A

FIG. 15B

FIG. 16A

FIG. 16B

FIG. 17

206

205

130

110

FIG. 18

206

205

130

110

FIG. 19A

206

205

130

120

110

DEPOSIT

FIG. 19B

110

206

205

130

120

PULSE DISCHARGE

207

FIG. 19C

110

206

205

130

GRIND/POLISH

120

208

## FIG. 20A

## FIG. 20B

DEPOSIT

## FIG. 20C

# FIG. 21

# FIG. 22A

20

10
7

A — — — — — — — — — — — — — — — A

8
9

# FIG. 22B

10  7  8  9

17
16
15

# FIG. 23

INFORMATION UNIT

V1

DETECTION VOLTAGE

V2

11

17

16

# FIG. 24

11

12

17

16